# EUROPÄISCHE PATENTSCHRIFT

(11) **EP 2 822 799 B1**
(45) Veröffentlichungstag und Bekanntmachung des Hinweises auf die Patenterteilung: **02.12.2015**
(21) Anmeldenummer: 13708092.5
(22) Anmeldetag: 04.03.2013
(51) Int. Cl.: G05B 7/02, G05G 1/10, B60K 37/06, H01H 19/00, H01H 3/00

(54) **DREHSTELLER**
ROTARY ACTUATOR
ACTIONNEUR ROTATIF

(30) Priorität: 07.03.2012 DE 102012004652
(43) Veröffentlichungstag der Anmeldung: 14.01.2015
(73) Patentinhaber: Audi AG, 85045 Ingolstadt (DE)
(72) Erfinder: KANDLER, Maximilian, 80339 München (DE)
(74) Vertreter: Brandt, Kai
(86) Internationale Anmeldenummer: PCT/EP2013/000614
(87) Internationale Veröffentlichungsnummer: WO 2013/131630

(56) Entgegenhaltungen:
- DE-A1- 4 205 875
- DE-A1- 10 126 076
- DE-A1-102007 039 318
- DE-A1-102009 037 184
- US-B2- 7 327 348

## Beschreibung

Die Erfindung betrifft einen Drehsteller, insbesondere für ein Kraftfahrzeug, mit einem um eine Achse drehbaren Betätigungselement, das in einer Führung aufgenommen ist und einem die Position des Betätigungselements in Umfangsrichtung erfassenden Positionssensor.

Derartige Drehsteller werden in Kraftfahrzeugen eingesetzt und dienen dazu, unterschiedliche Funktionen, die auf einem Display dargestellt werden, zu steuern. Dadurch können im Kraftfahrzeug unterschiedliche Systeme wie beispielsweise ein Navigationssystem, ein integriertes Telefon, ein Infotainmentsystem und Ähnliches angesteuert werden, innerhalb dieser Systeme können einzelne Funktionen gesteuert oder ausgewählt werden. Es sind auch Drehsteller bekannt, die zusätzlich axial betätigt werden können, um eine durch Drehen des Drehstellers in einem Menü ausgewählte und markierte Funktionen durch Drücken auszuwählen. Derartige Drehsteller, die eine axiale Schaltfunktion aufweisen, werden als Drehdrücksteller bezeichnet.

Einen Drehsteller mit den Merkmalen des Oberbegriffs des Anspruchs 1 zeigt die DE 42 05 875 A1.

Drehsteller weisen zumeist eine wellen- oder sägezahnförmig profilierte Steuerfläche und ein zugeordnetes Rastelement auf. Beim Drehen des Drehstellers wird die wellenförmige oder sägezahnförmige Steuerfläche gedreht, die mit dem Rastelement zusammenwirkt. Das Rastelement kann als Blattfeder ausgebildet sein, die eine oder zwei Rastnasen aufweist, die über die profilierte Steuerfläche laufen, wodurch jeweils ein Klickgeräusch erzeugt wird.

Da herkömmliche Drehsteller nach einer manuellen Betätigung im losgelassenen Zustand unmittelbar einrasten, werden sie von manchen Benutzern als "statisch" empfunden, zudem wird es als nachteilig empfunden, dass zur Bedienung des Drehstellers die ganze Hand erforderlich ist, die den Drehsteller komplett umgreifen muss. Die dafür aufzuwendende Kraft wird ebenfalls von manchen Benutzern als vergleichsweise hoch empfunden.

Der Erfindung liegt daher die Aufgabe zugrunde, einen Drehsteller anzugeben, der mit geringerem Kraftaufwand betätigt werden kann.

Zur Lösung dieser Aufgabe ist bei einem Drehsteller der eingangs genannten Art erfindungsgemäß vorgesehen, dass er so ausgebildet ist, dass die Drehbewegung des Betätigungselements nach einer manuellen Betätigung im losgelassenen Zustand eine bestimmte Strecke fortgesetzt und langsam verzögert wird.

Die Erfindung beruht auf der Idee, den Drehsteller lediglich durch einen leichten Impuls in Drehung zu versetzen, so dass nicht mehr die ganze Hand erforderlich ist, um den Drehsteller zu betätigen. Stattdessen genügt es, den Drehsteller mit einem oder mehreren Fingern anzuschieben, um eine Auswahl in einem Menü vorzunehmen. Dadurch ergibt sich für den Benutzer der Vorteil, dass ein Durchlaufen von auf einem Display angezeigten Listen leichter und schneller erfolgen kann, zudem vermittelt der erfindungsgemäße Drehsteller ein wertiges Gefühl wie bei der Bedienung einer berührungssensitiven Fläche (Touchpad).

Eine erste Variante eines nicht erfindungsgemäßen Drehstellers sieht vor, dass das Betätigungselement eine Schwungmasse aufweist, durch deren Drehimpuls das Betätigungselement im losgelassenen Zustand in Drehung versetzt wird. Durch Berühren und Drehen des Betätigungselements wird diesem durch den Benutzer ein Drehimpuls verliehen, nach dem Loslassen wird die Drehbewegung des Betätigungselements eine bestimmte Strecke bzw. für eine gewisse Zeit fortgesetzt, wobei die Drehbewegung unter dem Einfluss von Reibung abgebremst und schließlich gestoppt wird.

Bei dieser Variante wird es besonders bevorzugt, dass die Schwungmasse an der Unterseite des Betätigungselements, vorzugsweise verdeckt, angeordnet ist. Die Schwungmasse ist somit für den Benutzer nicht sichtbar und beeinträchtigt nicht das optische Erscheinungsbild des erfindungsgemäßen Drehstellers. Der Kontakt zwischen der wellenförmigen oder sägezahnförmigen Steuerfläche und dem Rastelement ist dabei so ausgelegt, dass die Reibung nicht zu stark ist. Nur wenn die Reibung gering ist, läuft das Betätigungselement nach dem Loslassen eine bestimmte Strecke weiter.

Der erfindungsgemäße Drehsteller weist einen Elektromotor zum Antreiben des Betätigungselements im losgelassenen Zustand auf.

Der Elektromotor ersetzt dabei die manuelle Betätigung bzw. er setzt diese fort. Nachdem das Betätigungselement von dem Benutzer in Drehung versetzt worden ist, wird es durch den Elektromotor weitergedreht, um einen "Nachlaufeffekt" zu erzeugen.

Der Drehsteller weist einen eine manuelle Betätigung des Betätigungselements erfassenden Sensor auf, der vorzugsweise als berührungssensitiver Sensor ausgebildet ist. Mittels des Sensors kann eine Betätigung durch einen Benutzer erfasst werden, insbesondere wird auf diese Weise festgestellt, ob der Benutzer das Betätigungselement losgelassen hat. Eine Ausgestaltung sieht vor, dass der Sensor als berührungssensitiver Sensor ausgebildet ist, so dass eine Berührung einfach festgestellt werden kann. Alternativ kann auch über die Auswertung der Drehgeschwindigkeit des Betätigungselements ermittelt werden, ob der Benutzer das Betätigungselement bereits losgelassen hat. Im losgelassenen Zustand tritt durch Reibungseinflüsse eine charakteristische Verzögerung der Drehbewegung auf, so dass der losgelassene Zustand auf diese Weise detektiert werden kann.

Erfindungsgemäß weist der Drehsteller ein Steuergerät auf oder ist mit einem Steuergerät verbunden, das den Elektromotor einschaltet, nachdem das Ende einer manuellen Betätigung erfasst worden ist. Vorzugsweise kann das Ende einer manuellen Betätigung mittels des Sensors erfasst werden, alternativ kann das Ende einer manuellen Betätigung durch die erläuterte Auswertung des Verlaufs der Drehgeschwindigkeit ermittelt werden. Nachdem festgestellt worden ist, dass der Benutzer das Betätigungselement losgelassen hat, wird der Elektromotor eingeschaltet, der das Betätigungselement eine gewisse Strecke bzw. eine gewisse Zeit weiterdreht, während es langsam verzögert wird und schließlich zum Stillstand kommt. Durch den Antrieb mittels des Elektromotors wird die manuell in Gang gesetzte Drehbewegung für eine bestimmte Strecke bzw. einen bestimmten Zeitraum fortgesetzt, wodurch ein besonders leichtes Anfahren von Menüeinträgen auf einem Display möglich ist.

Es liegt auch im Rahmen der Erfindung, dass das Betätigungselement eine näherungsweise scheibenförmige oder ringförmige Grundform aufweist und vorzugsweise oberflächenbündig zu einem das Betätigungselement umgebenden ortsfesten Bauteil angeordnet ist. Herkömmliche Drehsteller oder Drehdrucksteller sind zumeist zylinderförmig ausgebildet und stehen von einer Grundfläche nach oben ab. Erfindungsgemäß kann das Betätigungselement jedoch oberflächenbündig oder nahezu oberflächenbündig zu einer Abdeckung oder einer Konsole ausgebildet sein, so dass der Drehsteller besonders flach ausgebildet sein kann.

Daneben betrifft die Erfindung ein Kraftfahrzeug. Das erfindungsgemäße Kraftfahrzeug zeichnet sich dadurch aus, dass es einen Drehsteller der beschriebenen Art aufweist.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: ein erstes Ausführungsbeispiel eines erfindungsgemäßen Drehstellers in einer geschnittenen Ansicht;
- Fig. 2: den Drehsteller von Fig. 1 in einer perspektivischen Ansicht; und
- Fig. 3: eine geschnittene Seitenansicht eines weiteren Ausführungsbeispiels eines erfindungsgemäßen Drehstellers.

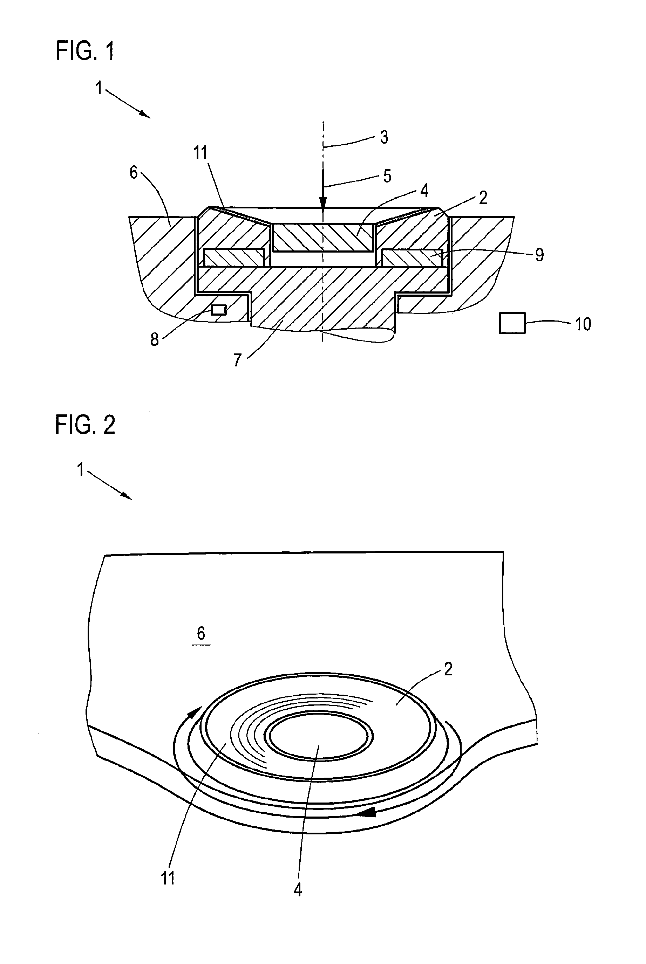

Der in Fig. 1 in einer geschnittenen Seitenansicht gezeigte Drehsteller 1 umfasst ein Betätigungselement 2, das um eine Achse 3 drehbar ist. Die Achse 3 ist gleichzeitig die Symmetrieachse des Betätigungselements 2.

Das Betätigungselement 2 weist eine von außen sichtbare ringförmige Grundform auf, im Zentrum des Betätigungselements 2 befindet sich ein Taster 4, der durch eine Kraft in Richtung des Pfeils 5 axial gedrückt werden kann, wodurch ein Schaltimpuls ausgelöst wird.

An seiner Unterseite weist das Betätigungselement 2 eine Welle 7 auf, durch die das Betätigungselement 2 drehbar gelagert ist. Dem Betätigungselement 2 ist ein in Fig. 1 schematisch dargestellter Positionssensor 8 zugeordnet, der die Position des Betätigungselements 2 in Umfangsrichtung erfasst.

Wenn das Betätigungselement 2 durch einen Benutzer manuell um seine Achse 3 gedreht wird, wird die Bewegung durch den Positionssensor 8 erfasst, wodurch ein Schaltsignal erzeugt wird. Dieses Schaltsignal wird für die Steuerung eines Eingabemenüs auf einem Display eines Kraftfahrzeugs verwendet, um in einem Auswahlmenü einen Menüpunkt anzufahren oder auszuwählen. Anschließend kann der ausgewählte Menüpunkt durch Drücken des Tasters 4 in Richtung des Pfeils 5 ausgewählt werden, indem durch die Betätigung des Tasters 4 ein Schaltsignal erzeugt wird. Bei dem in Fig. 4 gezeigten Ausführungsbeispiel ist der Taster 4 als zentraler runder Druckknopf ausgebildet, der von dem ringförmigen Betätigungselement 2 umgeben ist. Es sind allerdings auch alternative Ausführungen denkbar, bei denen das Betätigungselement selbst als Taste ausgebildet ist, d. h., das Betätigungselement kann in vertikaler Richtung gedrückt werden, um ein Schaltsignal zu erzeugen.

Der Drehsteller 1 umfasst einen Elektromotor 9, der in das Betätigungselement 2 integriert ist und im eingeschalteten Zustand das Betätigungselement 2 dreht. Der Elektromotor 9 ist mit einem Steuergerät 10 gekoppelt, das diesen steuert, d. h. der Elektromotor 9 wird durch das Steuergerät 10 ein- oder ausgeschaltet, ebenso kann die Drehzahl des Betätigungselements gesteuert oder geregelt werden. Zusätzlich können weitere Antriebselemente wie ein Untersetzungsgetriebe oder dergleichen vorgesehen sein.

An der Oberseite des Betätigungselements 2 ist ein berührungssensitiver Sensor 11 angeordnet, der eine manuelle Betätigung bzw. Berührung des Betätigungselements 2 erfasst. In dem dargestellten Ausführungsbeispiel ist der berührungssensitive Sensor 11 als Kontaktsensor ausgebildet, es sind jedoch auch andere Varianten denkbar, bei denen der berührungssensitive Sensor als Näherungssensor ausgebildet ist. Der berührungssensitive Sensor kann auch als kapazitiver oder induktiver Sensor ausgebildet sein.

Wie bereits erläutert wurde, kann der Benutzer das Betätigungselement 2 manuell in Drehung versetzen, um aus einer Liste von Menüeinträgen einen bestimmten Eintrag anzufahren oder auszuwählen. Der angefahrene Menüpunkt kann dabei in einer anderen Farbe oder mit einer Markierung versehen dargestellt werden, ebenso kann die Liste auf dem Display aufwärts oder abwärts gerollt werden. Diese manuelle Betätigung in Form einer Berührung wird mittels des berührungssensitiven Sensors 11 erfasst. Dementsprechend kann auch erfasst werden, ob der Benutzer das Betätigungselement 2 losgelassen hat. Wenn mittels des berührungssensitiven Sensors 11 erfasst worden ist, dass der Benutzer das Betätigungselement 2 losgelassen hat, schaltet das Steuergerät 10 den Elektromotor 9 ein, der das Betätigungselement 2 eine bestimmte Strecke weiterdreht. Der Elektromotor 9 wird dabei so gesteuert, dass die von dem Benutzer ausgelöste Drehbewegung verlängert bzw. weitergeführt wird, die Drehgeschwindigkeit wird dabei so gewählt, dass das Betätigungselement zunächst mit der vom Benutzer ausgelösten Drehgeschwindigkeit weitergedreht wird. Anschließend steuert das Steuergerät 10 den Elektromotor 9 so, dass die Drehbewegung des Betätigungselements 2 langsam verzögert wird, bis das Betätigungselement 2 zum Stillstand kommt.

Das Betätigungselement 2 kann auf diese Weise lediglich durch Antippen mit einem Finger in Gang gesetzt werden, indem dem Betätigungselement 2 ein kleiner Impuls verliehen wird. Die von dem Benutzer angestoßene Drehbewegung wird nach dem Loslassen des Betätigungselements 2 durch den elektrischen Antrieb fortgesetzt. Die Strecke, die das Betätigungselement 2 bei eingeschaltetem Elektromotor 9 weiterdreht, ist vergleichsweise kurz, so dass der Benutzer gezielt einzelne Menüeinträge oder dergleichen anwählen kann, da er intuitiv abschätzen kann, wie weit bzw. wie lange das Betätigungselement 2 nach dem Loslassen weiterläuft bzw. nachdreht.

In Fig. 2 erkennt man, dass das Betätigungselement 2 zumindest näherungsweise oberflächenbündig ist, jedenfalls steht es nur geringfügig von einer Grundfläche 6 ab, wie es von herkömmlichen Betätigungselementen bekannt ist.

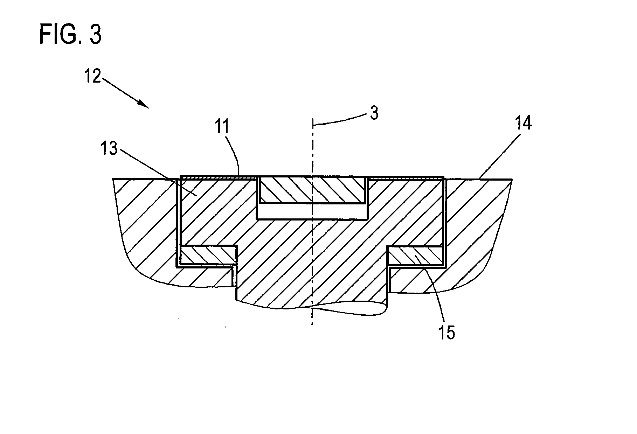

Fig. 3 zeigt ein zweites Ausführungsbeispiel eines Drehstellers 12 in einer geschnittenen Ansicht. Der Drehsteller 12 umfasst ein Betätigungselement 13, das um die Achse 3 drehbar ist. Das Betätigungselement 13 ist oberflächenbündig von einem ortsfesten Bauteil 14 umgeben, wodurch sich ein optisch besonders ansprechendes Erscheinungsbild ergibt. Neben dem in Fig. 3 gezeigten Drehsteller mit einem oberflächenbündigen Betätigungselement sind auch andere Ausführungen denkbar, bei denen das Betätigungselement erhaben ausgebildet ist und von der durch das ortsfeste Bauteil gebildeten Ebene absteht.

Im Unterschied zu dem vorangehenden Ausführungsbeispiel weist der Drehsteller 12 keinen Elektromotor auf, stattdessen ist an der Unterseite des Betätigungselements 13 eine ringförmige Schwungmasse 15 angebracht, durch deren Drehimpuls das Betätigungselement 13 im losgelassenen Zustand in Drehung versetzbar ist.

Beim manuellen Drehen des Betätigungselements 13 durch einen Benutzer wird dem Betätigungselement 13 und der damit fest verbundenen Schwungmasse 15 ein Drehimpuls verliehen, nach dem Loslassen dreht sich das in einer Führung gelagerte Betätigungselement 13 unter der Wirkung der kinetischen Energie weiter, wobei die Drehung durch Reibungseinflüsse langsam verzögert wird. Für den Benutzer ergibt sich ein ähnlicher Effekt wie bei der Benutzung des Drehstellers des ersten Ausführungsbeispiels, d. h. das Betätigungselement 13 kann leicht mit einem Finger oder mit mehreren Fingern angeschoben und in Drehung versetzt werden, anschließend läuft es selbsttätig weiter, bis es an einer Endposition stehen bleibt. Dadurch kann das Auswählen eines bestimmten Menüpunkts in einer Liste schneller erfolgen, zudem wird dem Benutzer ein ähnliches Gefühl wie bei einer berührungssensitiven Fläche (Touchpad) vermittelt.

## Patentansprüche

1. Drehsteller (1), insbesondere für ein Kraftfahrzeug, mit einem um eine Achse (3) drehbaren Betätigungselement (2) und einem die Position des Betätigungselements (2) in Umfangsrichtung erfassenden Positionssensor (8), wobei der Drehsteller (1) so ausgebildet ist, dass die Drehbewegung des Betätigungselements (2) nach einer manuellen Betätigung im losgelassenen Zustand eine bestimmte Strecke fortgesetzt und verzögert wird, wobei der Drehsteller (1) einen Elektromotor (9) zum Antreiben des Betätigungselements (2) im losgelassenen Zustand aufweist,
**dadurch gekennzeichnet,**
**dass** der Drehsteller (1) ein Steuergerät aufweist oder mit einem Steuergerät (10) verbunden ist, das den Elektromotor (9) einschaltet, wenn das Ende einer manuellen Betätigung erfasst worden ist.

2. Drehsteller nach Anspruch 1,
**dadurch gekennzeichnet,**
**dass** er einen eine manuelle Betätigung des Betätigungselements (2) erfassenden Sensor aufweist, der vorzugsweise als berührungssensitiver Sensor (11) ausgebildet ist.

3. Drehsteller nach Anspruch 2,
**dadurch gekennzeichnet,**
**dass** er ein Steuergerät aufweist oder mit einem Steuergerät (10) verbunden ist, das den Elektromotor (9) ausschaltet, wenn mittels des Sensors eine erneute manuelle Betätigung erfasst worden ist.

4. Drehsteller nach einem der vorangehenden Ansprüche,
**dadurch gekennzeichnet,**
**dass** das Betätigungselement (2) eine näherungsweise scheibenförmige oder ringförmige Grundform aufweist und vorzugsweise oberflächenbündig zu einem das Betätigungselement (2) umgebenden ortsfesten Bauteil angeordnet ist.

5. Kraftfahrzeug,
**dadurch gekennzeichnet,**
**dass** es einen Drehsteller (1) nach einem der Patentansprüche 1 bis 4 aufweist.

## Claims

1. Rotary actuator (1), in particular for a motor vehicle, comprising an actuating element (2) which is able to rotate about an axis (3) and comprising a position sensor (8) which detects the position of the actuating element (2) in the circumferential direction, wherein the rotary actuator (1) is designed in such a way that the rotational movement of the actuating element (2), after manual actuation, is continued for a certain distance in the released state and is decelerated, wherein the rotary actuator (1) has an electric motor (9) for driving the actuating element (2) in the released state, **characterized in that** the rotary actuator (1) has a control device or is connected to a control device (10) which switches on the electric motor (9) when the end of manual actuation has been detected.

2. Rotary actuator according to claim 1, **characterized in that** it has a sensor which detects manual actuation of the actuating element (2) and which is preferably configured as a touch-sensitive sensor (11).

3. Rotary actuator according to claim 2, **characterized in that** it has a control device or is connected to a control device (10) which switches off the electric motor (9) when renewed manual actuation has been detected by means of the sensor.

4. Rotary actuator according to any of the preceding claims, **characterized in that** the actuating element (2) has an approximately disc-shaped or ring-shaped basic shape and is preferably arranged surface-flush in relation to a stationary component surrounding the actuating element (2).

5. Motor vehicle, **characterized in that** it has a rotary actuator (1) according to any of claims 1 to 4.

## Revendications

1. Actionneur rotatif (1), en particulier pour un véhicule automobile, comprenant un élément de commande (2) rotatif autour d'un arbre (3) et un capteur de position (8) détectant la position de l'élément de commande (2) dans la direction périphérique, dans lequel l'actionneur rotatif (1) est conçu en sorte que le mouvement de rotation de l'élément de commande (2) soit, après une commande manuelle, continué et retardé à l'état relâché d'une distance déterminée, dans lequel l'actionneur rotatif (1) présente un moteur électrique (9) pour entraîner l'élément de commande (2) à l'état relâché,
**caractérisé en ce que** :
l'actionneur rotatif (1) présente un appareil de commande ou est lié à un appareil de commande (10) qui connecte le moteur électrique (9) lorsque la fin d'une commande manuelle a été détectée.

2. Actionneur rotatif selon la revendication 1, **caractérisé en ce que** :
il présente un capteur détectant une commande manuelle de l'élément de commande (2), lequel capteur est conçu de préférence sous la forme d'un capteur sensible au contact (11).

3. Actionneur rotatif selon la revendication 2, **caractérisé en ce que** :
il présente un appareil de commande ou il est lié à un appareil de commande (10) qui déconnecte le moteur électrique (9) lorsqu'une nouvelle commande manuelle a été détectée par le capteur.

4. Actionneur rotatif selon l'une quelconque des revendications précédentes,
**caractérisé en ce que** :
l'élément de commande (2) présente une forme fondamentale approximativement en disque ou en anneau et est aménagé de préférence à fleur de surface avec un composant fixe entourant l'élément de commande (2).

5. Véhicule automobile,
**caractérisé en ce que** :
il présente un actionneur rotatif (1) selon l'une quelconque des revendications 1 à 4.
